(19) 

Europäisches
Patentamt
European
Patent Office
Office européen
des brevets

(11)   **EP 1 912 376 B1**

(12)   **EUROPEAN PATENT SPECIFICATION**

(45) Date of publication and mention
of the grant of the patent:
**22.04.2009   Bulletin 2009/17**

(51) Int Cl.:
***H04L 9/32*** *(2006.01)*

(21) Application number: **06122041.4**

(22) Date of filing: **10.10.2006**

(54) **Method and apparatus for authentication**

Verfahren und Vorrichtung zur Authentifizierung

Procédé et dispositif d'authentification

(84) Designated Contracting States:
**DE GB**

(43) Date of publication of application:
**16.04.2008   Bulletin 2008/16**

(73) Proprietor: **NTT DoCoMo, Inc.**
**Tokyo (JP)**

(72) Inventors:
• **Kounga, Gina**
**35200Rennes (FR)**
• **Mitchell, Chris**
**Codford,**
**Warminster, BA12 0NE (GB)**
• **Walter, Thomas**
**80935 Muenchen (DE)**

(74) Representative: **Betten & Resch**
**Patentanwälte**
**Theatinerstrasse 8**
**(Fünf Höfe)**
**80333 München (DE)**

(56) References cited:
• **WEIMERSKIRCH ET AL.: "Identity Certified**
**Authentication for Ad-hoc Networks"**
**PROCEEDINGS OF THE 1. ACM WORKSHOP ON**
**SECURITY OF AD HOC AND SENSOR**
**NETWORKS,, 2003, pages 33-40, XP002428196**
**NEW YORK**
• **LAMPORT L: "PASSWORD AUTHENTICATION**
**WITH INSECURE COMMUNICATION"**
**COMMUNICATIONS OF THE ASSOCIATION FOR**
**COMPUTING MACHINERY, ACM, NEW YORK,**
**NY, US, vol. 24, no. 11, 1 November 1981**
**(1981-11-01), pages 770-772, XP000577349 ISSN:**
**0001-0782**

**Description**

**FIELD OF INVENTION**

The present invention relates to a method and an apparatus for authentication, in particular in an ad-hoc network or an infrastructureless network.

**BACKGROUND OF THE INVENTION**

When a server wants to establish a secure communication channel with a client, the server must authenticate the client in order to be sure that it is communicating with the one intended, and must establish a session key in a way that guarantees that only the intended client will know the value of that secret key. It should be noted that here and in the following the terms client and server are used to respectively designate the entity that is authenticated and the one that performs the authentication. They are not intended to be understood as being limited to define client-server type communication. The solution of the invention which will later be presented can be applied to any type of communication (client-server, peer to peer, etc.).

Two methods permit authentication and the establishment of secure communication channels: one can either use public key certificates or use pre-shared keys. However, these solutions either require that an online trusted third party (TTP) is always reachable that is able to distribute up-to-date certificate revocation status information and secret keys, or require that clients and servers share in advance a secret key. In ad hoc networks there is no fixed infrastructure which guarantees that a TTP is always reachable and that only entities are present that share a secret key in advance. This can prevent a server from establishing confidential communication with a client. However, many applications require confidentiality of data to be provided even in ad hoc networks, such as the exchange of authentic and confidential message between rescue teams during natural disasters (earthquakes, etc.), the exchange of confidential messages between business partners during a trade fair, the legal distribution of multimedia resources between mobile devices, etc. Two fundamental problems that need to be solved in order to establish secure communication channels in ad hoc networks are the following: How can a server authenticate a client that it has never met, and how can it establish a session key with it without using a public key certificate or a pre-shared secret key?

Existing solutions for authentication use hash chains. In existing solutions, when a client uses a one-way hash chain to prove its identity to a server, that client must publish the values contained in that chain. Because of this, these values cannot be used later to encrypt confidential data. This is the reason why one-way hash chains are not used to establish a secret key but only to perform authentication.

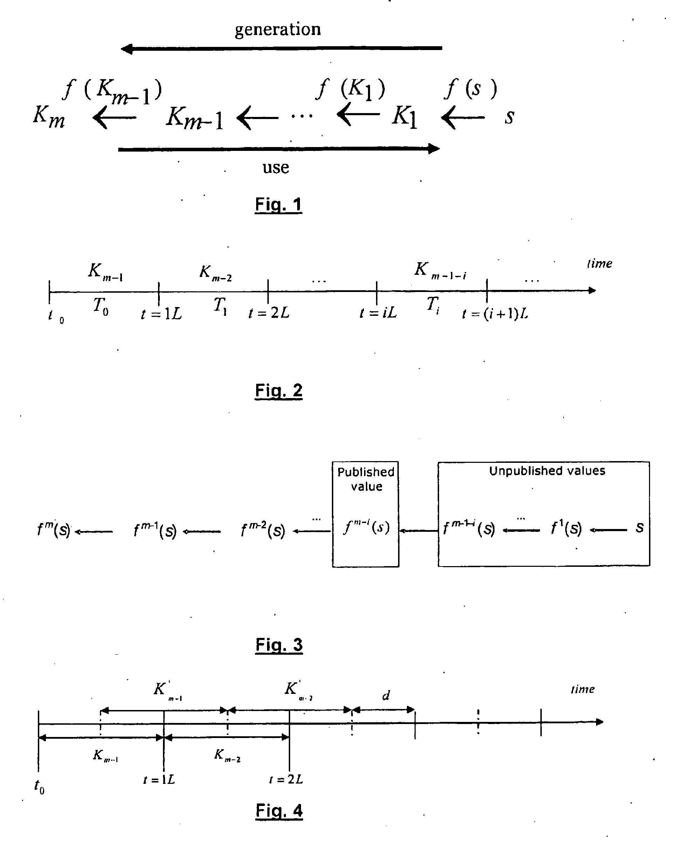

This use of one-way hash chains is schematically illustrated in Fig. 1. Here the client sends $K_m$ to the server. For the $i^{th}$ authentication to the server, the client sends $K_{m-i}$. The server then checks that $f^i(K_{m-i})=K_m$. Since one-way hash chains are computationally hard to revert, only the client that knows the secret value s used to generate the one-way hash chain is able to send valid values to the server.

One may therefore regard a problem posed in the prior art to provide a solution how to use one-way hash chains to establish secure communication channels as follow:

- How to define a one-way hash chain that permits publication of its elements without exposing these published elements to compromise?
- How to verify the identity of the client that generated these elements without using a public key certificate?
- How to use these published elements to derive a secret key?

More generally speaking, one may regard a problem of the invention of how to authenticate a client towards a server in an environment where no connection to a trusted third party is possible, such as in mobile ad-hoc networks.

In the following some prior art approaches are briefly presented.

In Y.-R. Tsai and S.-J. Wang, "Routing security and authentication mechanism for mobile ad hoc networks," in "Proceedings of the IEEE 60th Vehicular Technology Conference, 2004", entities from the same group share a group key and a pair-wise secret key with each member of the group. These keys are used to respectively prove the membership to the group and to prove its identity to a group member. However, in infrastructureless or ad-hoc networks, nothing guarantees that entities are always present that share a secret key in advance. Since no solution is proposed to permit entities that meet for the first time to establish shared keys, this solution can not always be used in infrastructureless or in ad-hoc networks.

The TESLA broadcast authentication protocol (see A. Perrig, R. Canneti, J. Tygar, and D. Song, "The TESLA broadcast authentication protocol," CryptoBytes, vol. 5, no. 2, pp. 2-13, 2002) relies on one-way hash chains (see L. Lamport, "Password authentication with insecure communication," Comm. ACM, vol. 24, no. 11, pp. 770-772, 1981) to authenticate the source of some broadcasted packets. However, the solution does not provide the means to bootstrap entity authentication. This must be provided by a regular data authentication system at session setup (see Perrig, D. Song, R. Canetti, J. D. Tygar, and B. Briscoe, "Timed Efficient Stream Loss-Tolerant Authentication (TESLA): Multicast Source Authentication Transform Introduction," RFC 4082 (Informational), June 2005). Moreover, it does not support the establishment of a secure communication channel.

In A. Weimerskirch and D. Westhoff, "Identity certified authentication for ad-hoc networks," in SASN '03: Proceedings of the 1st ACM workshop on Security of ad hoc and sensor networks. New York, NY, USA: ACM Press, 2003, pp. 33-40, an entity A has some certificates issued by a trusted third party TTP from the fixed network. The issuance of certificates is made while A has connectivity with a fixed network. Each certificate binds A's identity to its one-way hash chain. More specifically, A chooses a secret key $x_0$ that is the anchor of the chain. Given h, a secure cryptographic hash-function, $m \geq 1$ a system parameter, and $x_i = h^i(x_0)$ ($i \geq 0$), then the last generated hash value $x_{2m}$ from A's chain is contained in A's certificate. That certificate also contains the issuance time and a random seed. Then, A divides time into intervals of equal length L - with L a public value - and assigns two keys from its one-way hash chain to each interval - in respect of the sense of use of the chain. In the interval $T_i$ ($0 \leq i < m$) between times $t = iL$ and $t = (i + 1)L$, A uses the two values $x_{2m-2i-1}$ and $x_{2m-2i-2}$ from its chain to be authenticated by B. B can verify the correctness of these two values by first verifying the certificate to get a trusted copy of $x_{2m}$, and then iterating the hash-function the appropriate number of times on the hash values and comparing the result with the value $x_{2m}$. However, once $x_{2m-2i-1}$ and $x_{2m-2i-2}$ are disclosed, an attacker can replay them to an entity C to pretend it is A. To reduce this risk, B must ask A to use a certificate with a specific seed value. As a consequence, an attacker can only replay a previously disclosed key if it is asked by a verifying entity to present a certificate previously used and that contains a seed value already requested by another verifying node to A . However, since keys must be disclosed to perform entity authentication, they cannot be used to establish a secure communication channel. This means that an additional entity authentication solution must be used to permit A and B to establish an authenticated session key.

## SUMMARY OF THE INVENTION

According to one embodiment there is provided a method for authenticating a client or first node towards a server or second node in an ad-hoc network, said method comprising:

obtaining a secret key s by said client node and using it to generate a one-way hash chain which is bound to the identity of said client node through a unique hash-code value contained in a certificate;
deriving a number of m public/private key pairs, m being an integer, by said first node using said one-way hash chain of said first node, said public/private key pairs being bound to one another and to the hash-code value contained in said client node's certificate;
sending by said client node one of its generated public keys along with its certificate to said server node;
authenticating said client node by said server node by verifying that the disclosed public key is bound to the hash-code value contained in said client node's certificate.

In the provided solution, each client, say A, chooses (or somehow obtains) a secret key s and uses it to generate a one-way hash chain. That chain is bound to A's identity through a unique hash-code value contained in a certificate. The client uses its chain to derive a number of public/private key pairs. These public/private key pairs are bound to one another and to the hash code value contained in A's certificate. Then, to be authenticated by the server B, the client just needs to send one of its public keys to B along with its certificate. B can authenticate A by verifying that the disclosed public key is bound to the hash-code contained in A's certificate.

It should be mentioned here that the public/private key pairs "being bound to each other" can be implemented by deriving the public/private key pairs based on the elements of a hash chain. This ensures that they are not independent of each other but to some extent "depend on each other" and therefore may be regarded as "being bound to each other". If the hash code contained in the certificate of the client is also based on the hash chain this hash code may therefore also be regarded as "being bound to the public/private key pairs".

According to one embodiment said public/private key pairs are bound to each other by each of said public/private key pairs being generated based on a first one-way hash chain which is generated based on said secret key s using a first hash function, and said method comprises: sending one or more elements of the same hash chain on which said public key is based from said client to said server. This enables a plurality of keys to be generated based on a single secret value s. It further enables the checking by using one or more elements of the same hash chain on which the public key sent from the client to the server is based.

According to one embodiment said public/private key pairs are bound to said unique hash-code value contained in a certificate by applying a second hash function to said one way hash chain. This makes it necessary to store only a single hash value in said certificate.

According to one embodiment said hash-code value is bound to the identity of said client contained in said client's node certificate through a signature generated using the private key of a trusted third party. This initially generates trust during an initialization phase of the proposed scheme.

According to one embodiment said method comprises:

an initialization phase during which said client node is connected to a trusted third party and an authentication phase during which no connection to a trusted third
party is necessary, whereas said initialization phase comprises:

synchronizing the clock of the client with the one of the trusted third party;

deriving a check value $v = h(g^{\prod_{j=0}^{m} f^{j}(s)})$ whereas $f$ is said first cryptographic one-way hash function and h is said second one way hash function;
requesting from said trusted third party a certificate which binds the identity of said client to said check value, said certificate containing a reference time value;
dividing time into m equal intervals of length L, and assigning a respectively different key to each of said intervals, said keys being generated based on repeatedly applying said hash function $f$ to s , whereas

said client node uses in a time interval $T_{i}$, $0 \le i < m$ as private key $K_{m-1-i} = \prod_{j=0}^{m-i-1} f^{j}(s)$, and as

corresponding public key $g^{K_{m-1-i}}$, said
method further comprising an authentication phase that comprises:

sending said check value from said client to said server;
sending the public key $g^{K_w} = g^{K_{m-1-i}}$ assigned to the present time interval from said client to said server;
sending $f^{w+1}(s) = f^{m-i}(s)$ and said certificate from said client to said server;

and using these values by said server node which then computes:

$$v^{*} = (g^{K_w})^{\prod_{j=w+1}^{m} f^{j}(s)}$$

$$= g^{\prod_{j=0}^{w} f^{j}(s) \prod_{j=w+1}^{m} f^{j}(s)}$$

$$= g^{\prod_{j=0}^{m} f^{j}(s)}.$$

for verifying the identity of said client node by checking that $v = h(v^{*})$

In this manner authentication becomes possible without a third party being necessary for performing authentication.

According to one embodiment G=(G,*) is a finite cyclic group of order q, $g \in G$ is a generator of G, and $f$ is a cryptographic (one-way) hash-function mapping the set {0,1,...,q-1} onto itself.

According to one embodiment said initialization comprises:

distributing to said server node one or more of $G, g, f, m,$ the trusted third party's public key $K_{TTP}$ and h being a one way hash function;
and for the client node which wishes to prove its identity, calculating said check value accordingly and a certificate

according to $[ID, v, t_0, L]_{K_{TTP}^{-1}}$, whereas $ID$ is the identifier of said node, $t_0$ is a reference time or the issuing time of the

certificate, L defines the length of the time interval for which a public/private key pair is valid, and $\left[\ldots\right]_{K_{TTP}^{-1}}$ is the signature generated by the trusted third party with its private key $K_{TTP}^{-1}$ on the fields of the certificate.

In this manner at different moments in time different keys are used that can be authenticated as soon as they are received. The compromise of a key at a given time does not give any information about the keys that will be used in the future. Therefore, an attacker that has compromised a key in the past cannot impersonate a user in the future.
According to one embodiment a clock drift is taken into account by defining a maximum clock drift between synchronized clocks and further whether more than one key may be disclosed during authentication to take into account a possible clock drift. This can take into account imperfect synchronization or a drift of the clocks.
According to one embodiment said method comprises:

authenticating said server node towards said client node in the same manner as said client node was authenticated towards said server node. This enables a mutual authentication.

According to one embodiment said method further comprises:

establishing a session key between said client node and said server node by computing: $SK = (g^{K_w})^{K_y}$, whereas $g^{K_w}$ is the public key sent from said client to said server and $K_y$ is the said server's private key.

This provides a solution that permits a client and a server that do not share a secret key in advance to establish an authenticated session key without using a public key certificate but by using one-way hash chains.
According to one embodiment there is provided an apparatus for authenticating a client node towards a server node in an ad-hoc network, said apparatus comprising:

a module for obtaining a secret key s by said client node and using it to generate a one-way hash chain which is bound to the identity of said client node through a unique hash-code value contained in a certificate;
a module for deriving a number of m public/private key pairs, m being an integer, by said first node using said one-way hash chain of said first node, said public/private key pairs being bound to one another and to the hash-code value contained in said client node's certificate;
a module for sending by said client one of generated public keys along with its certificate to said server node;
a module for authenticating said first node by said second node by verifying that the disclosed public key is bound to the hash-code contained in said first node's certificate.

According to one embodiment said apparatus comprises:

an initialization module for executing an initialization during which said client node is connected to a trusted third party and an authentication phase during which no connection to a trusted third party is necessary, whereas said initialization comprises:

synchronizing the clock of the client with the one of the trusted third party;

deriving a check value $v = h(g^{\prod_{j=0}^{m} f^{j}(s)})$, whereas $f$ is said first cryptographic one-way hash function and $h$ is said second one way hash function;
requesting from said trusted third party a certificate which binds the identity of said client to said check value, said certificate containing a reference time value;
dividing time into m equal intervals of length L, and assigning a respectively different key to each of said intervals, said keys being generated based on repeatedly applying said hash function $f$ to s, whereas

said client node uses in a time interval $T_i$, $0 \leq i < m$ as private key $K_{m-i-1} = \prod_{j=0}^{m-i-1} f^{j}(s)$, and as

corresponding public key $g^{K_{m-i-1}}$, said apparatus further comprising an authentication module which comprises:
a module for sending said check value from said client to said server;
a module for sending the public key $g^{K_w} = g^{K_{m-i-1}}$ assigned to the present time interval from said client to said server;
a module for sending $f^{w+1}(s) = f^{m-i}(s)$ and said certificate from said client to said server;
and a module for using these values by said server node which then computes:

$$v^* = (g^{K_w})^{\prod_{j=w+1}^{m} f^j(s)}$$

$$= g^{\prod_{j=0}^{w} f^j(s) \prod_{j=w+1}^{m} f^j(s)}$$

$$= g^{\prod_{j=0}^{m} f^j(s)}.$$

for verifying the identity of said client node by checking that $v = h(v^*)$

According to one embodiment said apparatus comprises:

a module for taking into account a clock drift by defining a maximum clock drift between synchronized clocks and further whether more than one key may be disclosed during authentication to take into account a possible clock drift.

According to one embodiment said apparatus further comprises:

a module for authenticating said server node towards said client node in the same manner as said client node was authenticated towards said server node.

According to one embodiment said apparatus further comprises:

a module for establishing a session key between said client node and said server node by computing: $SK = (g^{K_w})^{K_y}$, where $g^{K_w}$ is the public key sent from said client to said server and $K_y$ is the said server's private key.

According to one embodiment there is provided a computer program for performing authentication in ad-hoc networks, said computer program comprising computer program code which when being executed on a computer enable said computer to carry out the method of one of the embodiments of the invention.
The proposed authentication scheme may be used to provide other security services such as authorization, integrity, etc. It can secure applications such as the secure exchange of resources: (e.g. multimedia files) in ad hoc networks. Nowadays, mobile phones are also MP3 players. Therefore mobile phones may be used to extend (legal) platforms for multimedia file distribution permitting distribution even when no infrastructure is accessible. The proposed scheme may further be used to secure confidential communication between business partners, e.g. during trade fairs, or the exchange of confidential and authentic data by rescue teams during natural disasters such as earthquakes, etc.

**BRIEF DESCRIPTION OF THE DRAWINGS**

Fig. 1 illustrates the use of one-way hash chains for authentication.
Fig.2 schematically illustrates the mapping between time intervals and keys generated with elements in the client's one-way hash chain according to an embodiment of the invention.
Fig.3 schematically illustrates which elements of a hash chain are published according to an embodiment of the invention.
Fig.4 schematically illustrates a mechanism for taking into account drift according to an embodiment of the invention.

**DETAILED DESCRIPTION**

In the following detailed embodiments of the invention will be described.
Prior to use of the authentication scheme according to an embodiment of the invention, certain system parameters need to be agreed by all parties, as follows.

- $G=(G,*)$ is a finite cyclic group of order $q$ (for some large $q$), $g \in G$ is a generator of $G$, and we assume that computing discrete logarithms in $G$ with respect to $g$ is computationally infeasible. For example, $G$ might be a large multiplicative subgroup of $Z_p^*$ for some large prime p, where $q$ is a large prime dividing $p$-1; alternatively $G$ could be the group of points on an elliptic curve (usually written additively).
- $h$ is a cryptographic (one way) hash-function mapping arbitrary length binary strings to strings of a fixed length ($\ell$ say, where a typical value for $\ell$ might be 224).
- $f$ is a cryptographic (one-way) hash-function mapping the set $\{0,1,...,q\text{-}1\}$ onto itself. In practice, $f$ might, for example, be derived from $h$.
- $m \geq 1$ is a positive integer that determines the number of key pairs available to the client.

In the following the authentication scheme according to an embodiment of the invention will be described.

When the scheme is initialized the client chooses a secret s E $\{0, 1, ... , q\text{-}1\}$. The client then generates the check value $v$ as

$$v = h(g^{\prod_{j=0}^{m} f^j(s)}),$$

and $v$ is included in a certificate signed by some trusted third party (TTP), e.g. the network operator to which the node has subscribed. That certificate contains the identity of the client and a reference time such as the issuance time of the certificate $t_0$. The client is synchronized with the TTP and divides time into intervals of equal length L, where L is a public value. Each interval is assigned a key generated with elements from the client's one-way hash chain obtained by repeatedly applying $f$ to s. This is schematically illustrated in Fig. 2 where it is shown how the time is divided into intervals of length L, and each interval at time iL has assigned a different key. A time different from the issuance time $t_0$ of the certificate may also be chosen as long as the time identifies correctly a certain moment in time so that based on the reference time at any moment later in time it can be determined which interval iL is valid at a certain time so that the corresponding key can be identified.

Subsequently, in time interval $T_1$, $0 \leq i \leq m$, the client uses as private key $K_{m-1-i} = \prod_{j=0}^{m-i-1} f^j(s)$, and as corresponding public key $g^{K_{m-1-i}}$. To enable a server to obtain a verified copy of the public key $g^{K_w}$ (where w=m-i-1), the client sends the server:

- $g^{K_w}$,
- $f^{w+1}(s)$, and
- the certificate containing $v$.
  The server can be assumed to know w (because it is time-dependent and can be derived from the present time and the reference time $t_0$ contained in the certificate) and can then compute
  $f^j(s)$, $w+1 \leq j \leq m$.

Using these values the server then computes

$$v^* = (g^{K_w})^{\prod_{j=w+1}^{m} f^j(s)}$$

$$= g^{\prod_{j=0}^{w} f^j(s) \prod_{j=w+1}^{m} f^j(s)}$$

$$= g^{\prod_{j=0}^{m} f^j(s)}.$$

Finally, the server checks that $v = h(v^*)$.

If the equality is verified then the server knows that $g^{K_w}$ was generated by the client whose identity is contained in the received certificate.

Fig. 3 illustrates that at a certain moment in time when the authentication is performed only the value of the hash chain belonging to the interval into which the moment falls is published. The preceding values of the hash chain are not published.

Therefore and because at different intervals different values are published the proposed mechanism achieves a high level of security.

If the server and the client agree to use asymmetric encryption, the server is able to send to the client a confidential message by encrypting it with $g^{Kw}$. Then, the client will be able to decrypt the message with its private key $K_w$.

According to one embodiment, if the server uses the same method as the one used by the client previously, then the server can prove its identity to the client by disclosing the key $g^{Ky}$. Once the client has verified the validity of $g^{Ky}$, it can generate a Diffie-Hellman session key SK with the server such that: $SK = (g^{Ky})^{Kw}$. The server obtains the same key by computing $SK = (g^{Kw})^{Ky}$.

In the described solution, client, server and TTP should have synchronized clocks. Many solutions can be used to achieve such a synchronization, including use of the network time protocol (see D. Mills. Network Time Protocol (Version 3) Specification, Implementation and Analysis. RFC 1305, March 1992), making the client and server become synchronized with the TTP's clock, etc. This is done at the initialization phase, while client and server are connected to the fixed network. However, afterwards they may run independently of the TTP and the fixed network. Synchronization is performed to permit verification of the freshness and the validity of keys published during the authentication process. However, entities do not need to have perfectly synchronized clocks. A clock drift of few seconds may not be a problem if, for instance, two keys, or more, are valid during one time period as represented in Fig. 4. If d is the maximum clock drift that is tolerated between two entities synchronized with the TTP, then d can be the period of time that separates, in the same time interval, the beginning of the validity period of these two keys. This guarantees that at least one key will permit to establish an authenticated session key in each time interval. To illustrate this, reference is made to Fig. 4.

In the interval $T_0$, $K_{m-1}$ and $K'_{m-1}$ are valid, and even if there is a clock drift between the client's and the server's clocks, that is less than or equal to d, then at least one of the keys will permit verification of the relation $v = h(v^*)$. if more than one key must be disclosed during a time interval, then the TTP can specify it in the certificates. The value of d may be specified by the TTP and sent to entities at the initialization phase.

In the described embodiment an entity does not need to verify the validity of the certificate by obtaining updated revocation status information. Indeed, if the value s is well protected - this could, for example, be based on a password or pass-phrase, and only stored in the machine for the brief period necessary to generate $K_i$, for some $i$- only the client that knows s is able to generate the key $K_{m-i-1}$ valid in interval $T_i$ as well as the corresponding public key $g^{Km}$-1-$i$. Since $K_{m-i-1}$ is generated with elements of the client's one-way hash chain that have not been published in another time period, and since one-way hash chains are computationally hard to reverse, an attacker is not able to find $K_{m-i-1}$ from keys that the client used in the past. It is also computationally hard for an attacker to find $K_{m-i-1}$ from $g^{Km}$-1-$i$ (see W. Diffie and M. Hellman. New Directions in Cryptography. In IEEE Transactions on Information Theory, Vol. IT-22, No. 6, pp. 644--654, 1976). For these reasons, only the legitimate owner of a certificate is able to generate a valid authenticated session key with a given server during a given time interval.

According to one embodiment certain optimizations in the public key verification process are possible if the server caches a trusted copy of a past public key for the client.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention. An apparatus implementing an embodiment of the invention may e.g. comprise a node or element in a network which is suitably programmed such that it is able to carry out an authentication as described in the embodiments of the invention.

According to an embodiment of the invention there is provided a computer program, either stored in a data carrier or in some other way embodied by some physical means such as a recording medium or a transmission link which when being executed on a computer enables the computer to operate in accordance with the embodiments of the invention described hereinbefore.

Embodiments of the invention may be implemented e.g. by nodes in a network or any entities in a network which are programmed to operate in accordance with the authentication mechanisms as described before.

**Claims**

**1.** A method for authenticating a client or first node towards a server or second node, said method comprising:

obtaining a secret key s by said client node and using it to generate a one-way hash chain which is bound to the identity of said client node through a unique hash-code value contained in a certificate;

deriving a number of m public/private key pairs, m being an integer, by said first node using said one-way hash chain of said first node, said public/private key pairs being bound to one another and to the hash-code value contained in said client node's certificate;

sending by said client node one of its generated public keys along with its certificate to said server node;

authenticating said first node by said second node by verifying that the disclosed public key is bound to the hash-code value contained in said client node's certificate.

2. The method of claim 1, wherein said public/private key pairs are bound to each other by each of said public/private key pairs being generated based on a first one-way hash chain which is generated based on said secret key s using a first hash function, and said method comprises:

   sending one or more elements of the same hash chain on which said public key is based from said client to said server.

3. The method of claim 1 or 2, wherein said public/private key pairs are bound to said unique hash-code value by applying a second hash function to said hash chain.

4. The method of one of the preceding claims, wherein said hash-code value is bound to the identity of said client contained in said client's node certificate through a signature generated using the private key of a trusted third party.

5. The method of one of claims 1 to 4, said method comprising:

   an initialization phase during which said client node is connected to a trusted third party and an authentication phase during which no connection to a trusted third party is necessary, whereas said initialization phase comprises:

   synchronizing the clock of the client with the one of the trusted third party;

   deriving a check value $v = h(g^{\prod_{j=0}^{m} f^j(s)})$, whereas $f$ is said first cryptographic one-way hash function, $h$ is said second one way hash function;

   requesting from said trusted third party a certificate which binds the identity of said client to said check value, said certificate containing a reference time value;

   dividing time into m equal intervals of length L, and assigning a respectively different key generated with elements from said client's one-way hash chain to each of said intervals, said one-way hash chain being generated based on repeatedly applying said hash function $f$ to s whereas

   said client node uses in a time interval $T_i$, $0 \leq i < m$ as private key $K_{m-1-i} = \prod_{j=0}^{m-i-1} f^j(s)$,

   and as corresponding public key $g^{K_{m-1-i}}$, said method further comprising an authentication phase comprises:

   sending said check value from said client to said server;
   sending the public key $g^{K_W} = g^{K_{m-1-i}}$ assigned to the present time interval from said client to said server;
   sending $f^{w+1}(s) = f^{m-i}(s)$ and said certificate from said client to said server;
   and using these values by said server node which then computes:

$$v^* = (g^{K_w})^{\prod_{j=w+1}^{m} f^j(s)}$$

$$= g^{\prod_{j=0}^{w} f^j(s) \prod_{j=w+1}^{m} f^j(s)}$$

$$= g^{\prod_{j=0}^{m} f^j(s)}.$$

for verifying the identity of said client node by checking that $v = h(v^*)$.

6. The method of claim 5, wherein $G=(G,*)$ is a finite cyclic group of order $q$, $g \in G$ is a generator of $G$, and $f$ is a cryptographic one-way hash-function mapping the set $\{0,1,...,q\text{-}1\}$ onto itself.

7. The method of one of the preceding claims, wherein said initialization comprises:

distributing to said server node one or more of $G$, $g$, $f$, $m$, the trusted third party's public key $K_{TTP}$ and $h$ being a one way hash function;
and for the client node which wishes to prove its identity, calculating said check value accordingly and a certificate

according to $[ID, v, t_0, L]_{K_{TTP}^{-1}}$ , whereas $ID$ is the identifier of said node, $t_0$ is a reference time or the issuing time of the certificate, L defines the length time interval for which a public/private key pair is valid,

and $[...]_{K_{TTP}^{-1}}$ is the signature generated by the trusted third party with its private key $K_{TTP}^{-1}$ on the fields of the certificate.

8. The method of one of claims 2 to 7, wherein
a clock drift is taken into account by defining a maximum clock drift between synchronized clocks and further whether more than one key may be disclosed during authentication to take into account a possible clock drift.

9. The method of one of the preceding claims, said method comprising:

authenticating said server node towards said client node in the same manner as said client node was authenticated towards said server node.

10. The method of claim 9, further comprising:

establishing a session key between said client node and said server node by computing: $SK = (g^{K_w})^{K_y} = (g^{K_y})^{K_w}$, where $g^{K_w}$ is the public key sent from said client to said server and $K_y$ is the said server's private key and $g^{K_y}$ is the public key sent from said server to sa id client and $K_w$ is the said client's private key.

11. An apparatus for authenticating a client or first node towards a server or second node in an ad-hoc network, said apparatus comprising:

a module for obtaining a secret key s by said client node and using it to generate a one-way hash chain which is bound to the identity of said client node through a unique hash-code value contained in a certificate:
a module for deriving a number of m public/private key pairs, m being an integer, by said first node using said one-way hash chain of said first node, said public/private key pairs being bound to one another and to the hash-code value contained in said client node's certificate:
a module for sending by said client node one of its generated public keys along with its certificate to said server node;
a module for authenticating said first node by said second node by verifying that the disclosed public key is bound to the hash-code <u>value</u> contained in said client node's certificate.

12. The apparatus of claim 11, wherein said public/private key pairs are bound to each other by each of said public/private key pairs being generated based on a first one-way hash chain which is generated based on said secret key s using a first one way hash function, and said apparatus comprises:

a module for sending one or more elements of the same hash chain on which said public key is based from said client to said server.

13. The apparatus of claim 11 or 12, wherein said public/private key pairs are bound to said unique hash-code value by applying a second hash function on said hash chain.

14. The apparatus of one of claims 11 to 13, wherein
said hash-code value is bound to the identity of said client contained in said client node's certificate through a signature generated musing the private key of a trusted third party.

15. The apparatus of one of claims 11 to 14, said apparatus comprising:

an initialization module for executing an initialization during which said client node is connected to a trusted third party and an authentication phase during which no connection to a trusted third party is necessary, whereas said an initialization comprises:

synchronizing the clock of the client with the one of the trusted third party;

deriving a check value $v = h(g^{\prod_{j=0}^{m} f^j(s)})$, whereas $f$ is said first cryptographic one-way hash function and h is said second one way hash function;
requesting from said trusted third party a certificate which binds the identity of said client to said check value, said certificate containing a reference time value;
dividing time into m equal intervals of length L, and assigning a respectively different key generated with elements from said client's one-way hash chain to each of said intervals, said one-way hash chain being generated based on repeatedly applying said hash function $f$ to s , whereas

said client node uses in a time interval $T_i$, $0 \le i < m$ as private key $K_{m-1-i} = \prod_{j=0}^{m-i-1} f^j(s)$,

and as corresponding public key $g^{K_{m-1-i}}$, said apparatus further comprising an authentication module which comprises:

a module for sending said check value from said client to said server;
a module for sending the public key $g^{K_w} = g^{K_{m-1-i}}$ assigned to the present time interval from said client to said server;
a module for sending $f^{w+1}(s) = f^{m-i}(s)$ and said certificate from said client to said server;
and a module for using these values by said server node which then computes:

$$v^* = (g^{K_w})^{\prod_{j=w+1}^{m} f^j(s)}$$

$$= g^{\prod_{j=0}^{w} f^j(s) \prod_{j=w+1}^{m} f^j(s)}$$

$$= g^{\prod_{j=0}^{m} f^j(s)}.$$

for verifying the identity of said client node by checking that v = $h(v^*)$

16. The apparatus of claim 15, wherein $G=(G,*)$ is a finite cyclic group of order $q$, $g \in G$ is a generator of $G$, and $f$ is a cryptographic one-way hash-function mapping the set $\{0,1,..,q-1\}$ onto itself.

17. The apparatus of one of claims 11 to 16, wherein said initialization comprises:

distributing to said server node one or more of $G$, $g$, $f$, $m$, the trusted party's public key $K_{TTP}$ and $h$ being a one way hash function;

and for the client node which wishes to prove its identity, calculating said check value accordingly, and a

certificate according to $[ID, v, t_0, L]_{K_{TTP}^{-1}}$ , whereas $ID$ is the identifier of said node, $t_0$ is a refer-

ence time or the issuing time of the certificate, L defines the length time interval for which a public/private key pair is chosen, and $[...]_{K_{TTP}^{-1}}$ is the signature generated by the trusted third party with its private key $K_{TTP}^{-1}$ on the fields of the certificate.

18. The apparatus of one of claims 11 to 17, further comprising
a module for taking into account a clock drift by defining a maximum clock drift between synchronized clocks and further whether more than one key may be disclosed during authentication to take into account a possible clock drift.

19. The apparatus of one of claims 11 to 18, further comprising:

a module for authenticating said server node towards said client node in the same manner as said client node was authenticated towards said server node.

20. The apparatus of claim 19, further comprising:

a module for establishing a session key between said client node and said server node by computing: $SK= (g^{K_w})^{K_y} = (g^{K_y})^{K_w}$, whereas $g^{K_w}$ is the public key sent from said client to said server and $K_y$ is the said server's private key and $g^{K_y}$ is the public key sent from said server to said client and $K_w$ is the said client's private key.

21. A computer program for performing authentication in ad hoc networks, said computer program comprising computer program code which when being executed on a computer enables said computer to carry out the method of one of claims 1 to 10.

**Patentansprüche**

1. Verfahren zum Authentifizieren eines Client-Knoten oder ersten Knotens gegenüber einem Server-Knoten oder zweiten Knoten, wobei das Verfahren aufweist:

Erhalten eines geheimen Schlüssels s durch den Client-Knoten und Verwenden von diesem zum Erzeugen einer Einweg-Hash-Kette, die an die Identität des Client-Knotens durch einen einmaligen Hash-Codewert gebunden ist, der in einem Zertifikat enthalten ist;
Ableiten einer Anzahl von m öffentlich/privaten Schlüsselpaaren, wobei m eine ganze Zahl ist, durch den ersten Knoten unter Verwendung der Einweg-Hash-Kette des ersten Knotens, wobei die öffentlich/privaten Schlüsselpaare aneinander gebunden und an den Hash-Codewert gebunden sind, der in dem Zertifikat des Client-Knotens enthalten ist;
Senden durch den Client-Knoten von einem von seinen erzeugten öffentlichen Schlüsseln zusammen mit seinem Zertifikat an den Server-Knoten;
Authentifizieren des ersten Knotens durch den zweiten Knoten durch Verifizieren, dass der offenbarte öffentliche Schlüssel an den Hash-Codewert, der in dem Zertifikat des Client-Knotens enthalten ist, gebunden ist.

2. Verfahren nach Anspruch 1, wobei die öffentlich/privaten Schlüsselpaare **dadurch** aneinander gebunden sind, dass jedes der öffentlich/privaten Schlüsselpaare basierend auf einer ersten Einweg-Hash-Kette erzeugt wird, die basierend auf dem geheimen Schlüssel s erzeugt wird, und zwar unter Verwendung einer ersten Hash-Funktion, wobei das Verfahren aufweist:

Senden von einem oder mehreren Elementen derselben Hash-Kette auf denen der öffentliche Schlüssel basiert von dem Client an den Server.

**3.** Verfahren nach Anspruch 1 oder 2, wobei die öffentlich/privaten Schlüsselpaare an den einmaligen Hash-Codewert gebunden sind durch Anwenden einer zweiten Hash-Funktion auf die Hash-Kette.

**4.** Verfahren nach einem der vorhergehenden Ansprüche, wobei
der Hash-Codewert an die Identität des Clients, die in dem Zertifikat des Client-Knotens enthalten ist, durch eine Signatur gebunden ist, die erzeugt wird unter Verwendung des privaten Schlüssels einer vertrauenswürdigen dritten Partei.

**5.** Verfahren nach einem der Ansprüche 1 - 4, wobei das Verfahren aufweist:

eine Initialisierungsphase während derer der Client-Knoten mit einer vertrauenswürdigen dritten Partei verbunden ist und eine Authentifizierungsphase, während derer keine Verbindung mit einer vertrauenswürdigen dritten Partei nötig ist, wobei die Initialisierungsphase aufweist:

Synchronisieren der Uhr des Clients mit der der vertrauenswürdigen dritten Partei;

Ableiten eines Prüfwerts $v = h(g^{\prod_{j=0}^{m} f^j(s)})$, wobei $f$ die erste kryptografische Einweg-Hash-Funktion ist, $h$ die zweite Einweg-Hash-Funktion ist;

Anfordern eines Zertifikats von der vertrauenswürdigen dritten Partei, welches die Identität des Clients an den Prüfwert bindet, wobei das Zertifikat einen Referenz-Zeitwert enthält;

Aufteilen von Zeit in m gleiche Intervalle der Länge L und Zuweisen eines jeweils unterschiedlichen Schlüssels, der mit Elementen der Einweg-Hash-Kette des Clients erzeugt wurde zu jedem der Intervalle, wobei die Einweg-Hash-Kette basierend auf wiederholtem Anwenden der Hash-Funktion $f$ auf s erzeugt wird, wobei

der Client-Knoten in einem Zeitintervall $T_i$ $0 \le i < m$ als privaten Schlüssel

$$K_{m-1-i} = \prod_{j=0}^{m-i-1} f^j(s)$$ verwendet, und als entsprechenden öffentlichen Schlüssel $g^{K_{m-1-i}}$,

wobei das Verfahren ferner eine Authentifizierungsphase umfasst, welche aufweist:

Senden des Prüfwerts von dem Client an den Server;
Senden des öffentlichen Schlüssels $gK^w = g^{K_{m-1-i}}$, der dem momentanen Zeitintervall zugewiesen ist, von dem Client an den Server;
Senden $f^{w+1}(s) = f^{m-i}(s)$ und des Zertifikats von dem Client an den Server; und
Verwenden dieser Werte durch den Server-Knoten, welcher dann berechnet:

$$v^* = (g^{K_w})^{\prod_{j=w+1}^{m} f^j(s)}$$

$$= g^{\prod_{j=0}^{w} f^j(s) \prod_{j=w+1}^{m} f^j(s)}$$

$$= g^{\prod_{j=0}^{m} f^j(s)}.$$

zum Verifizieren der Identität des Client-Knotens durch Überprüfen, dass $v=h(v^*)$.

6. Verfahren nach Anspruch 5, wobei $G=(G,*)$ eine finite zyklische Gruppe der Ordnung $q$ ist, $g \in G$ ein Generator von $G$ ist, und $f$ eine kryptografische Einweg-Hash-Funktion ist, die die Menge $\{0,1,...,q-1\}$ auf sich selbst abbildet.

7. Verfahren nach einem der vorhergehenden Ansprüche, wobei die Initialisierung aufweist:

Verteilen von einem oder mehreren aus $G$, $g$, $f$, $m$, des öffentlichen Schlüssels $K_{TTP}$ der vertrauenswürdigen dritten Partei und $h$, das eine Einweg-Hash-Funktion ist, an den Server-Knoten;
und für den Client-Knoten, der seine Identität nachweisen möchte, Berechnen des Prüfwerts entsprechend und eines Zertifikats gemäß $\left[ ID, v, t_0, L \right]_{K_{TTP}^{-1}}$ , wobei $ID$ die Kennung des Knotens ist, $t_0$ eine Referenzzeit oder Ausstellungszeit des Zertifikats ist, L die Länge des Zeitintervalls definiert, für das ein öffentlich/privates Schlüsselpaar gültig ist und $\left[ \cdots \right]_{K_{TTP}^{-1}}$ die Signatur ist, die erzeugt wird durch die vertrauenswürdige dritte Partei mit ihrem privaten Schlüssel $K_{TTP}^{-1}$ auf den Feldern des Zertifikats.

8. Verfahren nach einem der Ansprüche 2 - 7, wobei
eine Uhren-Drift **dadurch** berücksichtigt wird, dass eine maximale Uhren-Drift zwischen synchronisierten Uhren definiert wird und ferner, ob mehr als ein Schlüssel während der Authentifizierung offenbart werden kann, um einer möglichen Uhren-Drift Rechnung zu tragen.

9. Verfahren nach einem der vorhergehenden Ansprüche, wobei das Verfahren aufweist:

Authentifizieren des Server-Knotens gegenüber dem Client-Knoten auf dieselbe Weise wie der Client-Knoten gegenüber dem Server-Knoten authentifiziert wurde.

10. Verfahren nach Anspruch 9, ferner aufweisend:

Begründen eines Session-Schlüssels zwischen dem Client-Knoten und dem Server-Knoten durch Berechnen von: $SK = (g^{K_w})^{K_y} = (g^{K_y})^{K_w}$, wobei $g^{K_w}$ der öffentliche Schlüssel ist, der von dem Client an den Server gesendet wurde und $K_y$ der private Schlüssel des Servers ist und $g^{K_y}$ der öffentliche Schlüssel ist, der von dem Server an den Client gesandt wurde und $K_w$ der private Schlüssel des Clients ist.

11. Vorrichtung zum Authentifizieren eines Client-Knoten oder ersten Knoten gegenüber einem Server-Knoten oder zweiten Knoten in einem Ad-Hoc-Netzwerk, wobei die Vorrichtung folgendes aufweist:

ein Modul zum Erhalten eines geheimen Schlüssels s durch den Client-Knoten und Verwenden von diesem zum Erzeugen einer Einweg-Hash-Kette, die an die Identität des Client-Knotens durch einen einmaligen Hash-Codewert gebunden ist, der in einem Zertifikat enthalten ist;
ein Modul zum Ableiten einer Anzahl von m öffentlich/privaten Schlüsselpaaren, wobei m eine ganze Zahl ist, durch den ersten Knoten unter Verwendung der Einweg-Hash-Kette des ersten Knotens, wobei die öffentlich/privaten Schlüsselpaare aneinander gebunden und an den Hash-Codewert gebunden sind, der in dem Zertifikat des Client-Knotens enthalten ist;
ein Modul zum Senden durch den Client-Knoten von einem von seinen erzeugten öffentlichen Schlüsseln zusammmen mit seinem Zertifikat an den Server-Knoten;
ein Modul zum Authentifizieren des ersten Knotens durch den zweiten Knoten durch Verifizieren, dass der offenbarte öffentliche Schlüssel an den Hash-Codewert, der in dem Zertifikat des Client-Knotens enthalten ist, gebunden ist.

12. Vorrichtung nach Anspruch 11, wobei öffentlich/privaten Schlüsselpaare **dadurch** aneinander gebunden sind, dass jedes der öffentlich/privaten Schlüsselpaare basierend auf einer ersten Einweg-Hash-Kette erzeugt wird, die basierend auf dem geheimen Schlüssel s erzeugt wird, und zwar unter Verwendung einer ersten Hash-Funktion, wobei die Vorrichtung aufweist:

ein Modul zum Senden von einem oder mehreren Elementen derselben Hash-Kette auf denen der öffentliche Schlüssel basiert von dem Client an den Server.

13. Vorrichtung nach Anspruch 11 oder 12, wobei die öffentlich/privaten Schlüsselpaare an den einmaligen Hash-Codewert gebunden sind durch Anwenden einer zweiten Hash-Funktion auf die Hash-Kette.

14. Vorrichtung nach einem der Ansprüche 11 - 13, wobei
der Hash-Codewert an die Identität des Clients, die in dem Zertifikat des Client-Knotens enthalten ist, durch eine Signatur gebunden ist, die erzeugt wird unter Verwendung des privaten Schlüssels einer vertrauenswürdigen dritten Partei.

15. Vorrichtung nach einem der Ansprüche 11 - 14, wobei die Vorrichtung aufweist:

ein Initialisierungsmodul zum Ausführen einer Initialisierung während derer der Client-Knoten mit einer vertrauenswürdigen dritten Partei verbunden wird und eine Authentifizierungsphase während derer keine Verbindung mit einer vertrauenswürdigen dritten Partei nötig ist, wobei die Initialisierung aufweist:

Synchronisieren der Uhr des Clients mit der der vertrauenswürdigen dritten Partei;

Ableiten eines Prüfwerts $v = h(g^{\prod_{j=0}^{m} f^j(s)})$, wobei $f$ die erste kryptografische Einweg-Hash-Funktion ist, $h$ die zweite Einweg-Hash-Funktion ist;
Anfordern eines Zertifikats von der vertrauenswürdigen dritten Partei, welches die Identität des Clients an den Prüfwert bindet, wobei das Zertifikat einen Referenz-Zeitwert enthält;
Aufteilen von Zeit in m gleiche Intervalle der Länge L und Zuweisen eines jeweils unterschiedlichen Schlüssels, der mit Elementen der Einweg-Hash-Kette des Clients erzeugt wurde zu jedem der Intervalle, wobei die Einweg-Hash-Kette basierend auf wiederholtem Anwenden der Hash-Funktion $f$ auf s erzeugt wird, wobei

der Client-Knoten in einem Zeitintervall $T_i$ $0 \leqq i < m$ als privaten Schlüssel

$$K_{m-1-i} = \prod_{j=0}^{m-i-1} f^j(s)$$ verwendet, und als entsprechenden öffentlichen Schlüssel $g^{K_{m-1-i}}$,

wobei die Vorrichtung, ferner ein Authentifizierungsmodul umfasst, welche aufweist:

ein Modul zum Senden des Prüfwerts von dem Client an den Server;
ein Modul zum Senden des öffentlichen Schlüssels $g^{K_w} = g^{K_{m-1-i}}$, der dem momentanen Zeitintervall zugewiesen ist, von dem Client an den Server;
ein Modul zum Senden $f^{w+1}(s) = f^{m-i}(s)$ und des Zertifikats von dem Client an den Server; und
ein Modul zum Verwenden dieser Werte durch den Server-Knoten, welcher dann berechnet:

$$v^* = (g^{K_w})^{\prod_{j=w+1}^{m} f^j(s)}$$
$$= g^{\prod_{j=0}^{w} f^j(s) \prod_{j=w+1}^{m} f^j(s)}$$
$$= g^{\prod_{j=0}^{m} f^j(s)}.$$

zum Verifizieren der Identität des Client-Knotens durch Überprüfen, dass $v = h(v^*)$.

**16.** Vorrichtung nach Anspruch 15, wobei $G=(G,*)$ eine finite zyklische Gruppe der Ordnung $q$ ist, $g \in G$ ein Generator von G ist, und $f$ eine kryptografische Einweg-Hash-Funktion ist, die die Menge $\{0,1,...,q-1\}$ auf sich selbst abbildet.

**17.** Vorrichtung nach einem der Ansprüche 11 - 16, wobei die Initialisierung aufweist:

Verteilen von einem oder mehreren aus $G$, $g$, $f$, $m$, des öffentlichen Schlüssels $K_{TTP}$ der vertrauenswürdigen dritten Partei und $h$, das eine Einweg-Hash-Funktion ist, an den Server-Knoten;
und für den Client-Knoten, der seine Identität nachweisen möchte, Berechnen des Prüfwerts entsprechend und eines Zertifikats gemäß $\left[ ID, v, t_0, L \right]_{K_{TTP}^{-1}}$ , wobei $ID$ die Kennung des Knotens ist, $t_0$ eine Referenzzeit oder Ausstellungszeit des Zertifikats ist, L die Länge des Zeitintervalls definiert, für das ein öffentlich/privates Schlüsselpaar gültig ist und $\left[ ... \right]_{K_{TTP}^{-1}}$ die Signatur ist, die erzeugt wird durch die vertrauenswürdige dritte Partei mit ihrem privaten Schlüssel $K_{TTP}^{-1}$ auf den Feldern des Zertifikats.

**18.** Vorrichtung nach einem der Ansprüche 11-17, ferner aufweisend:

ein Modul zum Berücksichtigen einer Uhren-Drift indem eine maximale Uhren-Drift zwischen synchronisierten Uhren definiert wird und ferner, ob mehr als ein Schlüssel während der Authentifizierung offenbart werden kann, um einer möglichen Uhren-Drift Rechnung zu tragen.

**19.** Vorrichtung nach einem der Ansprüche 11-18, ferner aufweisend:

ein Modul zum Authentifizieren des Server-Knotens gegenüber dem Client-Knoten auf dieselbe Weise wie der Client-Knoten gegenüber dem Server-Knoten authentifiziert wurde.

**20.** Vorrichtung nach Anspruch 19, ferner aufweisend:

ein Modul zum Begründen eines Session-Schlüssels zwischen dem Client-Knoten und dem Server-Knoten durch Berechnen von: $SK = (g^{K_w})^{K_y} = (g^{K_y})^{K_w}$ wobei $g^{K_y}$ der öffentliche Schlüssel ist, der von dem Client an den Server gesendet wurde und $K_y$ der private Schlüssel des Servers ist und $g^{K_y}$ der öffentliche Schlüssel ist, der von dem Server an den Client gesandt wurde und $K_w$ der private Schlüssel des Clients ist.

**21.** Computerprogramm zum Durchführen einer Authentifizierung in Ad-Hoc-Netzwerken, wobei das Computerprogramm einen Computerprogrammcode aufweist, der wenn er auf einem Computer ausgeführt wird, den Computer in die Lage versetzt, ein Verfahren gemäß einem der Ansprüche 1-10 auszuführen.

**Revendications**

**1.** Procédé pour authentifier un noeud client ou un premier noeud vers un noeud serveur ou un deuxième noeud, ledit procédé comprenant les étapes consistant à :

obtenir une clé secrète s par ledit noeud client et l'utiliser pour générer une chaîne de hachage unidirectionnelle qui est liée à l'identité dudit noeud client à travers une valeur de code de hachage unique contenue dans un certificat ;
dériver un nombre de m paires de clés publiques/privées, m étant un nombre entier, par ledit premier noeud en utilisant ladite chaîne de hachage unidirectionnelle dudit premier noeud, lesdites paires de clés publiques/ privées étant liées entre elles et à la valeur de code de hachage contenue dans le certificat dudit noeud client ;
envoyer par ledit noeud client une de ses clés publiques générées avec son certificat au dit noeud serveur ;
authentifier ledit premier noeud par ledit deuxième noeud en vérifiant que la clé publique divulguée est liée à la valeur de code de hachage contenue dans le certificat dudit noeud client.

**2.** Procédé selon la revendication 1, dans lequel lesdites paires de clés publiques/privées sont liées entre elles par chacune desdites paires de clés publiques/privées générées sur la base d'une première chaîne de hachage unidirectionnelle qui est générée sur la base de ladite clé secrète s en utilisant une première fonction de hachage, et ledit procédé comprend l'étape consistant à :

envoyer un ou plusieurs éléments de la même chaîne de hachage sur laquelle ladite clé publique est basée dudit client au dit serveur.

**3.** Procédé selon la revendication 1 ou 2, dans lequel lesdites paires de clés publiques/privées sont liées à ladite valeur de code de hachage unique en appliquant une deuxième fonction de hachage à ladite chaîne de hachage.

**4.** Procédé selon l'une des revendications précédentes, dans lequel :

ladite valeur de code de hachage est liée à l'identité dudit client contenue dans le certificat de noeud dudit client à travers une signature générée en utilisant la clé privée d'un tiers de confiance.

**5.** Procédé selon l'une des revendications 1 à 4, ledit procédé comprenant :

une phase d'initialisation au cours de laquelle ledit noeud client est connecté à un tiers de confiance et une phase d'authentification au cours de laquelle aucune connexion à un tiers de confiance n'est nécessaire, dans lequel ladite phase d'initialisation comprend les étapes consistant à :

synchroniser l'horloge du client avec celle du tiers de confiance ;

dériver une valeur de contrôle $v = h\left(g^{\prod_{j=0}^{m} f^j(s)}\right)$ dans lequel f est ladite première fonction de hachage unidirectionnelle cryptographique, et h est ladite deuxième fonction de hachage unidirectionnelle
demander au dit tiers de confiance un certificat qui lie l'identité dudit client à ladite valeur de contrôle, ledit certificat contenant une valeur de temps de référencé ;
diviser le temps en m intervalles égaux de longueur L, et affecter une clé respectivement différente générée avec des éléments de la chaîne de hachage unidirectionnelle dudit client à chacun desdits intervalles, ladite fonction de hachage unidirectionnelle étant générée sur la base de l'application à répétition de ladite fonction de hachage f à s, dans lequel

ledit noeud client utilise dans un intervalle de temps $T_i$, $0 \leq i \leq m$ en tant que clé privée

$$K_{m-1-i} = \prod_{j=0}^{m-i-1} f^j(s) ,$$ et en tant que clé publique correspondante $g^{K_{m-1-i}}$, ledit procédé comprenant en outre une phase d'authentification qui comprend les étapes consistant à :

envoyer ladite valeur de contrôle dudit client au dit serveur ;
envoyer la clé publique $g^{K_w} = g^{K_{m-1-i}}$ affectée à l'intervalle de temps présent dudit client au dit serveur ;
envoyer $f^{w+1}(s) = f^{m-i}(s)$ et ledit certificat dudit client au dit serveur ;
et utiliser ces valeurs par ledit noeud serveur qui calcule ensuite :

$$v^* = \left(g^{K_w}\right)^{\prod_{j=w+1}^{m} f^j(s)}$$

$$= g^{\prod_{j=0}^{w} f^j(s) \prod_{j=w+1}^{m} f^j(s)}$$

$$= g^{\prod_{j=0}^{m} f^j(s)}$$

pour vérifier l'identité dudit noeud client en contrôlant que v=h(v*).

**6.** Procédé selon la revendication 5, dans lequel G=(G,*) est un groupe cyclique fini d'ordre q, g ∈ *G* est un générateur de G, et f est une fonction de hachage unidirectionnelle cryptographique mappant l'ensemble {0,1,...,*q* -1} sur lui-même.

**7.** Procédé selon l'une des revendications précédentes, dans lequel ladite initialisation comprend les étapes consistant à :

distribuer sur ledit noeud serveur un ou plusieurs de G, g, f, m, la clé publique du tiers de confiance $K_{TTP}$ et h étant une fonction de hachage unidirectionnelle ;
et pour le noeud client qui souhaite prouver son identité, calculer ladite valeur de contrôle en conséquence et un certificat selon $[ID.v.t_0.L]_{K_{TTP}^{-1}}$ , dans lequel ID est l'identifiant dudit noeud, $t_0$ est un temps de référence ou le temps d'émission du certificat, L définit la longueur de l'intervalle de temps pour lequel une paire de clés publiques/privées est valable, et $[--]_{K_{TTP}^{-1}}$ est la signature générée par le tiers de confiance avec sa clé privée $K_{TTP}^{-1}$ sur les champs du certificat.

**8.** Procédé selon l'une des revendications 2 à 7, dans lequel :

une dérive d'horloge est prise en compte en définissant une dérive d'horloge maximale entre des horloges synchronisées et en outre si plus d'une clé peut être divulguée au cours de l'authentification pour prendre en compte une dérive d'horloge possible.

**9.** Procédé selon l'une des revendications précédentes, ledit procédé comprenant l'étape consistant à :

authentifier ledit noeud serveur vers ledit noeud client de la même manière que ledit noeud client a été authentifié vers ledit noeud serveur.

**10.** Procédé selon la revendication 9, comprenant en outre l'étape consistant à :

établir une clé de session entre ledit noeud client et ledit noeud serveur en calculant : $SK=(g^{K_w})^{K_y} = (g^{K_y})^{K_w}$, où $g^{K_w}$ est la clé publique envoyée dudit client au dit serveur et $K_y$ est la clé privée dudit serveur et $g^{K_y}$ est la clé publique envoyée dudit serveur au dit client et $K_w$ est la clé privée dudit client.

**11.** Appareil pour authentifier un noeud client ou un premier noeud vers un noeud serveur ou un deuxième noeud dans un réseau ad hoc, ledit appareil comprenant :

un module pour obtenir une clé secrète s par ledit noeud client et l'utiliser pour générer une chaîne de hachage unidirectionnelle qui est liée à l'identité dudit noeud client à travers une valeur de code de hachage unique contenue dans un certificat ;
un module pour dériver un nombre de m paires de clés publiques/privées, m étant un nombre entier, par ledit premier noeud en utilisant ladite chaîne de hachage unidirectionnelle dudit premier noeud, lesdites paires de clés publiques/privées étant liées entre elles et à la valeur de code de hachage contenue dans le certificat dudit noeud client ;
un module pour envoyer par ledit noeud client une de ses clés publiques générées avec son certificat au dit noeud serveur ;
un module pour authentifier ledit premier noeud par ledit deuxième noeud en vérifiant que la clé publique divulguée est liée à la valeur de code de hachage contenue dans le certificat dudit noeud client.

**12.** Appareil selon la revendication 11, dans lequel lesdites paires de clés publiques/privées sont liées entre elles par chacune desdites paires de clés publiques/privées générées sur la base d'une première chaîne de hachage unidirectionnelle qui est générée sur la base de ladite clé secrète s en utilisant une première fonction de hachage unidirectionnelle, et ledit appareil comprend :

un module pour envoyer un ou plusieurs éléments de la même chaîne de hachage sur laquelle ladite clé publique est basée dudit client au dit serveur.

13. Appareil selon la revendication 11 ou 12, dans lequel lesdites paires de clés publiques/privées sont liées à ladite valeur de code de hachage unique en appliquant une deuxième fonction de hachage à ladite chaîne de hachage.

14. Appareil selon l'une des revendications 11 à 13, dans lequel :

ladite valeur de code de hachage est liée à l'identité dudit client contenue dans le certificat de noeud dudit client à travers une signature générée en utilisant la clé privée d'un tiers de confiance.

15. Appareil selon l'une des revendications 11 à 14, ledit appareil comprenant :

un module d'initialisation pour exécuter une initialisation au cours de laquelle ledit noeud client est connecté à un tiers de confiance et une phase d'authentification au cours de laquelle aucune connexion à un tiers de confiance n'est nécessaire, dans lequel ladite initialisation comprend les étapes consistant à :

synchroniser l'horloge du client avec celle du tiers de confiance ;

dériver une valeur de contrôle $v = h\left(g^{\prod_{j=0}^{m} f^{j}(s)}\right)$ dans lequel f est ladite première fonction de hachage unidirectionnelle cryptographique, et h est ladite deuxième fonction de hachage unidirectionnelle ;
demander au dit tiers de confiance un certificat qui lie l'identité dudit client à ladite valeur de contrôle, ledit certificat contenant une valeur de temps de référence ;
diviser le temps en m intervalles égaux de longueur L, et affecter une clé respectivement différente générée avec des éléments de la chaîne de hachage unidirectionnelle dudit client à chacun desdits intervalles, ladite fonction de hachage unidirectionnelle étant générée sur la base de l'application à répétition de ladite fonction de hachage f à s, dans lequel

ledit noeud client utilise dans un intervalle de temps $T_i$, $0 \leq i \leq m$ en tant que clé privée

$K_{m-1-i} = \prod_{j=0}^{m-i-1} f^{j}(s)$, et en tant que clé publique correspondante $g^{K_{m-1-i}}$, ledit appareil comprenant en outre un module d'authentification qui comprend :

un module pour envoyer ladite valeur de contrôle dudit client au dit serveur ;
un module pour envoyer la clé publique $g^{K_w} = g^{K_{m-1-i}}$ affectée à l'intervalle de temps présent dudit client au dit serveur ;
un module pour envoyer $f^{w+1}(s) = f^{m-i}(s)$ et ledit certificat dudit client au dit serveur ;
et un module pour utiliser ces valeurs par ledit noeud serveur qui calcule ensuite :

$$v^* = \left(g^{K_w}\right)^{\prod_{j=w+1}^{m} f^{j}(s)}$$
$$= g^{\prod_{j=0}^{w} f^{j}(s)\prod_{j=w+1}^{m} f^{j}(s)}$$
$$= g^{\prod_{j=0}^{m} f^{j}(s)}$$

pour vérifier l'identité dudit noeud client en contrôlant que v=h(v*).

16. Appareil selon la revendication 15, dans lequel G=(G,*) est un groupe cyclique fini d'ordre q, g ∈ G est un générateur de G, et f est une fonction de hachage unidirectionnelle cryptographique mappant l'ensemble {0,1,...q-1} sur lui-même.

17. Appareil selon l'une des revendications 11 à 16, dans lequel ladite initialisation comprend les étapes consistant à :

distribuer sur ledit noeud serveur un ou plusieurs de G, g, f, m, la clé publique du tiers de confiance $K_{TTP}$ et h étant une fonction de hachage unidirectionnelle ;
et pour le noeud client qui souhaite prouver son identité, calculer ladite valeur de contrôle en conséquence et un certificat selon $[ID.v.t_0.L]_{K_{TTP}^{-1}}$, dans lequel ID est l'identifiant dudit noeud, $t_0$ est un temps de référence ou le temps d'émission du certificat, L définit la longueur de l'intervalle de temps pour lequel une paire de clés publiques/privées est valable, et $[-]_{K_{TTP}^{-1}}$ est la signature générée par le tiers de confiance avec sa clé privée $K_{TTP}^{-1}$ sur les champs du certificat.

18. Appareil selon l'une des revendications 11 à 17, comprenant en outre :

un module pour prendre en compte une dérive d'horloge en définissant une dérive d'horloge maximale entre des horloges synchronisées et en outre si plus d'une clé peut être divulguée au cours de l'authentification pour prendre en compte une dérive d'horloge possible.

19. Appareil selon l'une des revendications 11 à 18, comprenant en outre :

un module pour authentifier ledit noeud serveur vers ledit noeud client de la même manière que ledit noeud client a été authentifié vers ledit noeud serveur.

20. Appareil selon la revendication 19, comprenant en outre :

un module pour établir une clé de session entre ledit noeud client et ledit noeud serveur en calculant : $SK = (g^{K_w})^{K_y} = (g^{K_y})^{K_w}$, où $g^{K_w}$ est la clé publique envoyée dudit client au dit serveur et $K_y$ est la clé privée dudit serveur et $g^{K_y}$ est la clé publique envoyée dudit serveur au dit client et $K_w$ est la clé privée dudit client.

21. Programme informatique pour effectuer l'authentification dans des réseaux ad hoc, ledit programme informatique comprenant un code de programme informatique qui, lorsqu'il est exécuté sur un ordinateur, permet au dit ordinateur d'effectuer le procédé selon l'une des revendications 1 à 10.

generation

$K_m \leftarrow \overset{f(K_{m-1})}{} K_{m-1} \leftarrow \cdots \leftarrow K_1 \overset{f(K_1)}{} \leftarrow \overset{f(s)}{} s$

use

**Fig. 1**

$$\underset{t_0}{|}\ \overset{K_{m-1}}{\underset{T_0}{}}\ \underset{t=1L}{|}\ \overset{K_{m-2}}{\underset{T_1}{}}\ \underset{t=2L}{|}\ \cdots\ \underset{t=iL}{|}\ \overset{K_{m-1-i}}{\underset{T_i}{}}\ \underset{t=(i+1)L}{|}\ \cdots \quad time$$

**Fig. 2**

| Published value | Unpublished values |
|---|---|

$f^m(s) \leftarrow f^{m-1}(s) \leftarrow f^{m-2}(s) \leftarrow \cdots \leftarrow f^{m-i}(s) \leftarrow f^{m-1-i}(s) \leftarrow \cdots \leftarrow f^1(s) \leftarrow s$

**Fig. 3**

$$K'_{m-1} \qquad K'_{m-2} \qquad d \qquad\qquad time$$
$$\underset{t_0}{|}\ \overset{K_{m-1}}{}\ \underset{t=1L}{|}\ \overset{K_{m-2}}{}\ \underset{t=2L}{|}$$

**Fig. 4**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Y.-R. TSAI ; S.-J. WANG.** Routing security and authentication mechanism for mobile ad hoc networks. *Proceedings of the IEEE 60th Vehicular Technology Conference,* 2004
- **A. PERRIG ; R. CANNETI ; J. TYGAR ; D. SONG.** The TESLA broadcast authentication protocol. *CryptoBytes,* 2002, vol. 5 (2), 2-13
- **L. LAMPORT.** Password authentication with insecure communication. *Comm. ACM,* 1981, vol. 24 (11), 770-772
- **PERRIG, D. SONG ; R. CANETTI ; J. D. TYGAR ; B. BRISCOE.** Timed Efficient Stream Loss-Tolerant Authentication (TESLA): Multicast Source Authentication Transform Introduction. *RFC 4082 (Informational,* June 2005
- Identity certified authentication for ad-hoc networks. **A. WEIMERSKIRCH ; D. WESTHOFF.** SASN '03: Proceedings of the 1st ACM workshop on Security of ad hoc and sensor networks. ACM Press, 2003, 33-40
- **D. MILLS.** Network Time Protocol (Version 3) Specification, Implementation and Analysis. *RFC 1305,* March 1992
- **W. DIFFIE ; M. HELLMAN.** New Directions in Cryptography. *IEEE Transactions on Information Theory,* 1976, vol. IT-22 (6), 644-654